Europäisches Patentamt

European Patent Office

Office européen des brevets

(11) Publication number: **0 394 935**
**A2**

## EUROPEAN PATENT APPLICATION

(21) Application number: **90107688.5**

(22) Date of filing: **24.04.90**

(30) Priority: **27.04.89 JP 108724/89**

(43) Date of publication of application:
**31.10.90 Bulletin 90/44**

(84) Designated Contracting States:
**DE FR GB IT**

(51) Int. Cl.⁵: **G06F 12/06**

(71) Applicant: **Kabushiki Kaisha Toshiba**
**72, Horikawa-cho Saiwai-ku**
**Kawasaki-shi(JP)**

(72) Inventor: **Takenaka, Tsutomu, c/o Intellectual**
**Property Div.**
**Kabushiki Kaisha Toshiba 1-1 Shibaura**
**1-chome**
**Minato-ku Tokyo 105(JP)**

(74) Representative: **Henkel, Feiler, Hänzel &**
**Partner**
**Möhlstrasse 37**
**D-8000 München 80(DE)**

(54) **Computer capable of expanding a memory capacity.**

(57) A computer capable of expanding a memory capacity comprises a standard memory (11) and expanding memory slots (12, 13). Each of the memory slots (12, 13) is connected to status lines (21, 31). The status lines (21, 31) transmit a status signal which represents whether an option memory module (12M, 13M) is connected to each of the slots (12, 13) and which represents a memory capacity of the memory module (12M, 13M) connected to the slot (12, 13). Upon receiving the status signal and address data, address decoder (15) determines which of the standard memory (11) and the option memory module (12M, 13M) is to be accessed. One of the standard memory (11) and the option memory module (12M, 13M) is accessed in accordance with a result of the determination of the address decoder (15).

FIG.2

Xerox Copy Centre

EP 0 394 935 A2

EP 0 394 935 A2

## Computer capable of expanding a memory capacity

The present invention relates to a computer capable of expanding a memory capacity and, more particularly, to a computer capable of packaging a plurality of types of option memory modules each having different memory capacities.

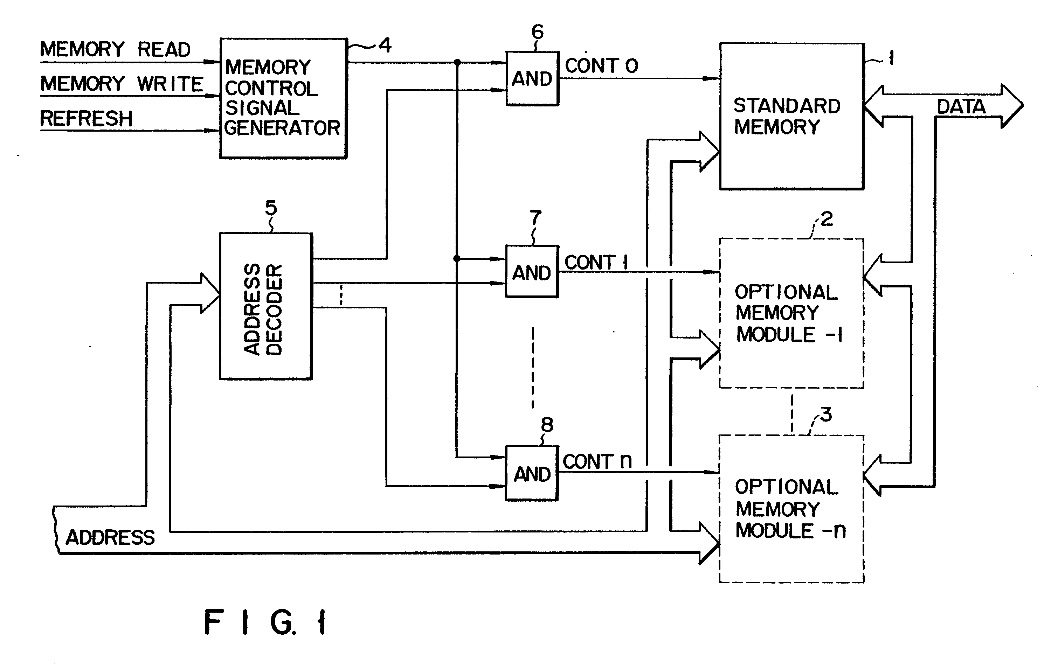

Fig. 1 is a block diagram showing a configuration of a conventional computer system capable of expanding a memory capacity. The computer system includes standard memory 1 and n (= a positive integer) memory slots into which additional memory modules are inserted to further expand the memory capacity. When the need arises, the first to the nth option memory modules (2, ... 3) are inserted into the memory slots. An address bus and a data bus are connected to standard memory 1 and option memory modules 2 and 3.

Memory control signal generating circuit 4 generates memory control signals (If the memory is DRAM, control signals such as RAS, CAS and WR are generated from a memory access signal such as MEMORY READ, MEMORY WRITE or REFRESH). Address decoder 5, which is connected to the address bus, decodes an address signal and determines which one of the memories 1, 2, ..., 3 is designated by the address signal. Address decoder 5 then outputs a memory control signal for accusing a memory designated by the address signal. AND gate circuit 6 carries out an AND operation between the memory control signal output from memory control signal generating circuit 4 and the address decode signal for standard memory 1 which is output from address decoder 5. When the address signal designates standard memory 1, AND gate circuit 6 supplies memory control signal CONT0 to standard memory 1. AND gate circuit 7 carries out an AND operation between the memory control signal output from memory control signal generating circuit 4 and the address decode signal for memory module 2 output from address decoder 5. When the address signal designates first option memory module 2, AND gate circuit 7 supplies memory control signal CONT1 to memory module 2. AND gate circuit 8 carries out an AND operation between the memory control signal output from memory control signal generating circuit 4 and the address decode signal for memory module 3 output from address decoder 5. When the address signal designates the nth option memory module 3, AND gate circuit 8 supplies memory control signal CONTn to memory module 3.

With the above operations, a memory designated by the address signal can be accessed, and either data can be read out from a location of the memory designated by the address signal or data can be written in a location of the memory.

In the configuration shown in Fig. 1, however, address decoder 5 cannot determine the capacity of the option memory module or which of the slots contains the memory module. For this reason, an option memory module having a predeterminate capacity cannot be used. An option memory module having a predetermined capacity must be used and memory modules must be added in the order by which the address signals are decoded. For example, it is necessary to define the first addition of a memory module as the first option memory module and to define the last addition as the nth option memory module.

As described above, the conventional computer system shown in Fig. 1 has a drawback in that a user cannot freely expand memory capacity.

An object of the present invention is to provide a computer which has an improved use and whose memory capacity can be expanded.

Another object of the present invention is to provide a memory control system to which a memory module having an arbitrary memory capacity can be connected in an arbitrary position.

To attain the above objects, there is provided a data processing system which functions to expand memory capacity. The system includes a data processing means for instructing access of address data and a memory for data processing as well as a standard memory means connected to the data processing means, for storing data. Also included is a plurality of holding means each of which is detachably connected to respective additional memory means, the additional memory means being added to the standard memory means and storing data to expand the memory capacity which is usable for the data processing means. A detecting means detects whether each holding means is connected to the additional memory means and, when the holding means is connected to the additional memory means, detects a capacity of the additional memory means. Subsequently, determining means determines which of the standard memory means and additional memory means is to be accessed, in response to a detection result of the detecting means and the address data. An access means is connected to the data processing means, the standard memory means and the additional memory means, for accessing the memory means determined by the determining means in accordance with an instruction of the data processing means.

With the above configuration, a user can package an additional memory means having an arbitrary

2

capacity in one of a plurality of holding means. Therefore, the user need not specify the capacity of the additional memory means or need not take into consideration the order of package of the memory means added to the holding means. A data processing apparatus having a desired memory capacity can thus be provided.

This invention can be more fully understood from the following detailed description when taken in conjunction with the accompanying drawings, in which:

Fig. 1 is a block diagram showing a configuration of the main part of a conventional computer having a function of expanding a memory;

Fig. 2 is a block diagram showing a computer according to an embodiment of the present invention;

Figs. 3A and 3B are block diagrams showing configurations of memory modules shown in Fig. 2; and

Fig. 4 is a block diagram showing a configuration of an address decoder shown in Fig. 2.

A computer whose memory capacity can be expanded according to an embodiment of the present invention will be described with reference to the accompanying drawings. For easy understanding, the number of expandable option memory modules (slots for expanding a memory) is assumed to be 2, and the capacities of the two option memory modules which are inserted into the slots are 256K bytes and 1M byte.

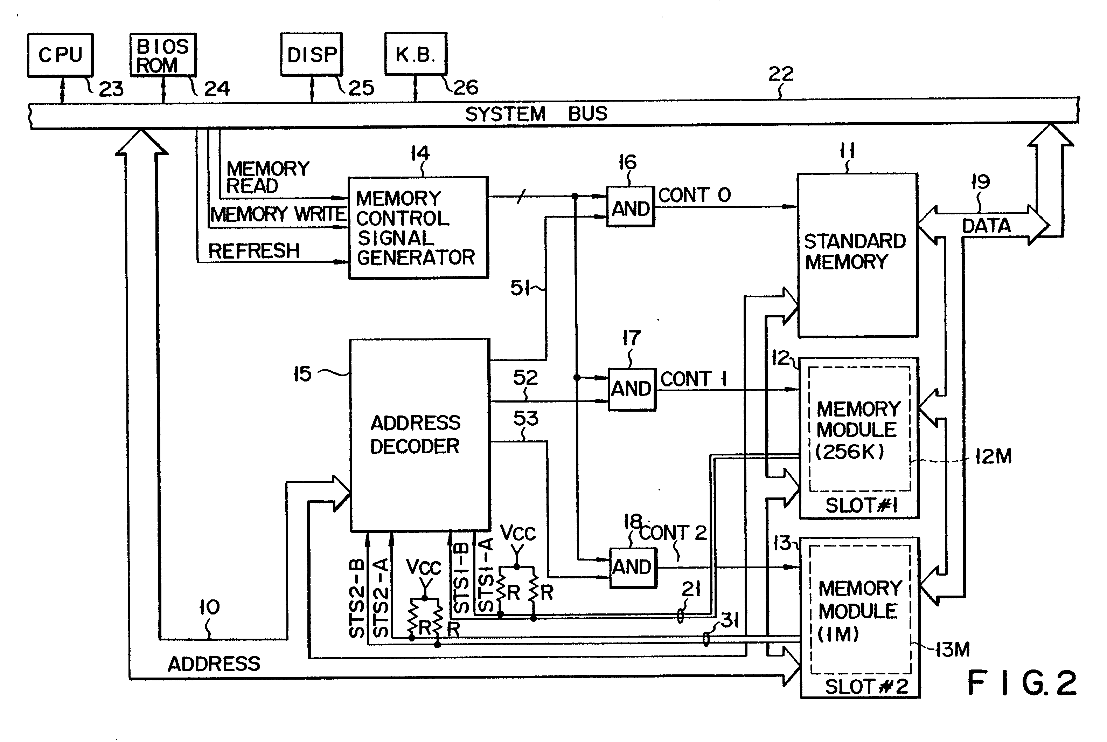

Referring to Fig. 2, a configuration of the computer according to the present invention will now be described.

The computer includes a standard memory 11 which is operated as a main memory of the computer. The computer also includes a first expanding memory slot 12 and a second expanding memory slot 13. When required, the option memory module 12M is inserted in memory slot 12 and option memory module 13M is inserted in memory slot 13.

Status line 21 is connected to memory slot 12, and status line 31 is connected to memory slot 13. Status lines 21 and 31 transmit a signal indicating whether the option memory modules are inserted into memory slots 12 and 13. The transmitted signal also contains status information representing the capacities of the memory modules. More specifically, each of status lines 21 and 31 is constituted of two lines which are connected to power source voltage Vcc via load resistors R. When 2-bit status signals STSi-A and STSi-B (i = 1 or 2) on status lines 21 and 31 are "0, 1" ("0" = low level, "1" = high level), an option memory module of 256K bytes is inserted into its corresponding slot. When the status signals are "1, 0", an option memory module of 1M byte is inserted into its corresponding slot. When the status signals are "1, 1", an option memory module is not inserted into its corresponding slot so that the slot remains vacant. Table 1 shows the relationship between the memory capacities of option memory modules 12M and 13M inserted into memory slots 12 and 13 and the status signals output from the option memory modules. In Table 1, the status signals output from option memory modules 12M and 13M are represented as STS-A and STS-B, respectively. Hereinafter, the status signals on status line 21 are referred to as STS1-A and STS1-B, and the status signals on status line 31 are referred to as STS2-A and STS2-B.

TABLE 1

| Memory Module | STS-B | STS-A |
|---|---|---|
| None (Vacant Slot) | "1" | "1" |
| 256K bytes | "1" | "0" |
| 1M byte | "0" | "1" |
| Undefined | "0" | "0" |

Memory control signal generating circuit 14 is coupled with system bus 22 to receive memory access signals for accessing a memory, such as MEMORY READ, MEMORY WRITE and REFRESH. Circuit 4 generates memory control signals in response to the memory access signals. (If the memory is DRAM, circuit 4 generates signals such as RAS, CAS and WR).

Address decoder 15 is coupled with status lines 21 and 31 and address bus 10. Address decoder 15 decodes an address signal in accordance with status signals STS1-A, STS1-B, STS2-A and STS2-B and determines which of standard memory 11, option memory module 12M, and option memory module 13M is designated by the address signal. When the address signal designates standard memory 11, address decoder 15 supplies gate enable signal "1" to signal line 51. When the address signal designates option memory module 12M, address decoder 15 supplies gate enable signal "1" to signal line 52. When the address signal designates memory module 13M, address decoder 15 supplies gate enable signal "1" to signal line 53. The configuration of address decoder 15 will be later described in detail with reference to

3

Fig. 4.

AND gate circuit 16 performs an AND operation between the memory control signal output from memory control signal generating circuit 14 and the gate enable signal on signal line 51. When the gate enable signal is at a "1" level, AND gate circuit 16 supplies memory control signal CONT0 to standard memory 11. AND gate circuit 17 performs an AND operation between the memory control signal output from memory control signal generating circuit 14 and the gate enable signal on signal line 52. When the gate enable signal is at a "1" level, AND gate circuit 17 supplies memory control signal CONT1 to memory module 12M inserted into first expanding memory slot 12. AND gate circuit 18 performs an AND operation between the memory control signal output from memory control signal generating circuit 14 and the gate enable signal on signal line 53. When the gate enable signal is at a "1" level, AND gate circuit 18 supplies memory control signal CONT2 to option memory module 13M inserted into second expanding memory slot 13.

The data I/O ports of standard memory 11 and memory modules 12M and 13M are connected to system bus 22 via data bus 19. System bus 22 includes an address bus, a data bus, and a control bus and transmits an address signal, a data signal, and a control signal. System bus 22 is connected to CPU (Central Processing Unit) 23, BIOS (Basic Input Output System) ROM 24, display 25, keyboard 26 and the like.

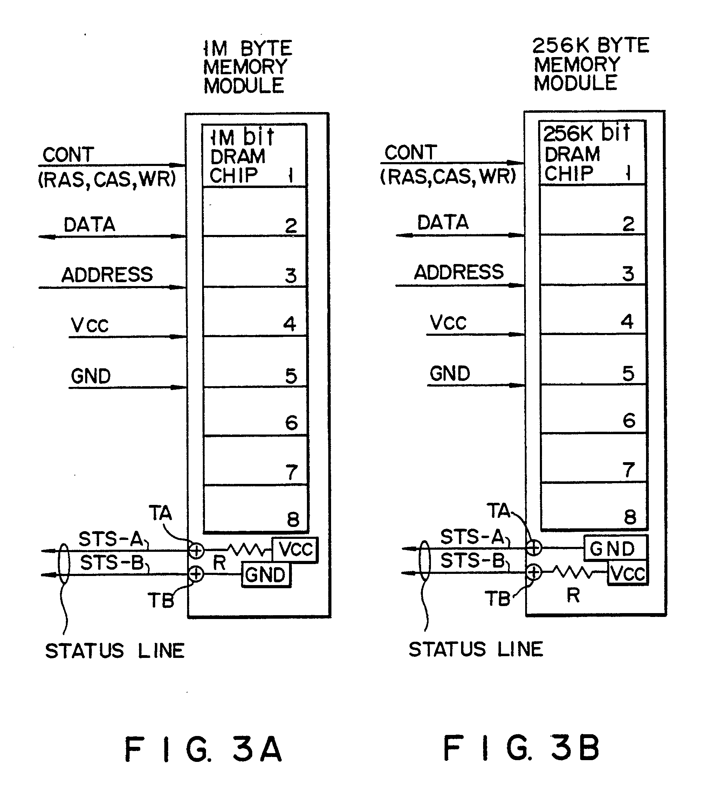

The configurations of the two option memory modules employed in the above embodiment will be described. Fig. 3A illustrates a configuration of the 1M byte option memory module and, Fig. 3B illustrates a configuration of the 256K byte option memory module.

The 1M byte memory module illustrated in Fig. 3A comprises eight 1M bit DRAM chips. Similarly, the 256K byte memory module comprises eight 256K bit DRAM chips. When each memory module is inserted in the slot, each of the memory chips is supplied with memory control signal CONT, an address signal, power source voltage Vcc, and ground voltage GND. Further, when each module is inserted in the slot, a corresponding 1-bit line of the data bus is connected to the data I/O port of each memory chip.

Each of the memory modules comprises terminals TA and TB. When the memory module is inserted in the slot, terminal TA is connected to status line STA-A and terminal TB is connected to status line STS-B. Terminal TA of the 1M byte memory module is connected to power source voltage Vcc through resistor R, and terminal TB thereof is grounded. When the 1M byte memory module is inserted into the slot, status line STS-A becomes "1" level and status line STS-B becomes "0" level. Terminal TA of 256K byte memory module is grounded, and terminal TB thereof is connected to power source voltage Vcc through resistor R. When the 256K byte memory module is inserted into the slot, status line STS-A becomes "0" level and status line STS-B becomes "1" level.

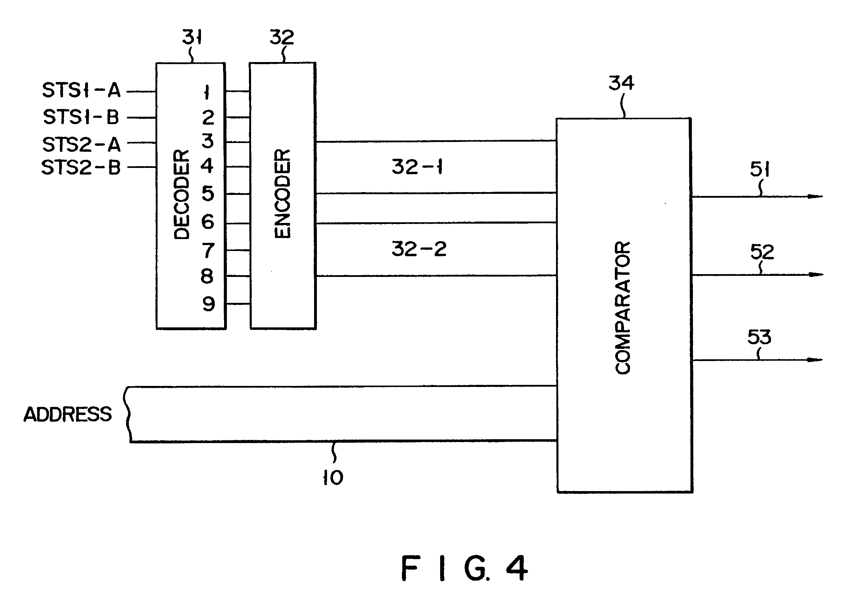

The configuration of address decoder 15 will be next described with reference to Fig. 4.

Status lines STS1-A, STS1-B, STS2-A and STS2-B are coupled with decoder 31. The combination of status signals STS1-A, STS1-B, STS2-A and STS2-B depend on the types of the memory modules inserted into expanding memory slots 11 and 12 and is expressed in Table 2. Decoder 31 causes one of nine output signals to be set at a "1" level in accordance with a combination of the levels of signals on the status lines.

Assuming that the end address of standard memory 11 is X and one byte corresponds to one address, the address of each option memory module has a range as shown in Table 2. In response to an output signal of decoder 31, encoder 32 outputs data 32-1 representing a range of the address of the memory module inserted into memory slot 1 and data 32-2 representing a range of the address of the memory module inserted into slot 2.

An output terminal of encoder 32 and address bus 10 are connected to comparator 34. Comparator 34 compares an address on address bus 10 with data 32-1 and 32-2, and determines which of standard memory 11 and memory modules 12M and 13M is designated by the address on address bus 10 and then supplies a signal onto signal lines 51, 52 and 53.

Encoder 32 can output data indicating the initial address and the end address of each memory module, as data 32-1 and 32-2 and, in this case, comparator 34 compares the address on address bus 10 with data 32-1 and 32-2. When the address on address bus 10 is smaller than the initial address represented by data 32-1 and 32-2, comparator 34 determines that standard memory 11 has been accessed and sets signal line 51 at a "1" level. When the address on address line 10 is interposed between the initial address represented by data 32-1 and the end address, comparator 34 determines that the memory module inserted into slot 12 has been accessed and sets signal line 52 at a "1" level.

Encoder 32 can be so constructed as to output the end address of the memory module inserted into each of the memory slots and, in this case, comparator 34 compares the address data on address line 10, the end address (which is known beforehand) of standard memory 11, and the end address represented by data 32-1 and 32-2 to determine which of the memories or memory modules is addressed. On the basis of a result of the determination, one of signal lines 51, 52 and 53 becomes a "1" level.

Table 2

| Memory Module of Slot 11 | Memory Module of Slot 12 | STS1-A | STS1-B | STS2-A | STS2-B | Address Range of Memory Module Inserted in Slot 11 | Address Range of Memory Module Inserted in Slot 12 |
|---|---|---|---|---|---|---|---|
| NOTHING | NOTHING | 1 | 1 | 1 | 1 | NOTHING | NOTHING |
| 1M | 1M | 1 | 0 | 1 | 0 | X to X+1M-1 | X+1M to X+2M-1 |
| 256K | 256K | 0 | 1 | 0 | 1 | X to X+256K-1 | X+256K to X+512K-1 |
| 1M | NOTHING | 1 | 0 | 1 | 1 | X to X+1M-1 | NOTHING |
| NOTHING | 1M | 1 | 1 | 1 | 0 | NOTHING | X to X+1M-1 |
| 256K | NOTHING | 0 | 1 | 1 | 1 | X to X+256K-1 | NOTHING |
| NOTHING | 256K | 1 | 1 | 0 | 1 | NOTHING | X to X+256K-1 |
| 1M | 256K | 1 | 0 | 0 | 1 | X to X+1M-1 | X+1M to X+1M+256K-1 |
| 256K | 1M | 0 | 1 | 1 | 0 | X to X+256K-1 | X+256K to X+256K+1M-1 |

6

An operation of the computer shown in Fig. 2 will be next described with reference to Figs. 3A, 3B and 4. An operation of a characteristic part of this computer will be specifically described

When any option memory modules are not inserted (packaged) into first and second expanding memory slots 12 and 13, status signals STS1-A and STS1-B on status line 21 and status signals STS2-A and STS2-B on status line 31 are all at a "1" level. Address decoder 15 sets signals lines 52 and 53 at a "0" level to close AND gate circuits 17 and 18. Memory control signals CONT1 and CONT2 are thus prevented from being supplied to memory slots 12 and 13 and the option memory modules are not accessed.

Assuming that a user inserts a 1M byte option memory module shown in Fig. 3A into first expanding memory slot 12 in the above situation, a status signal of "1, 0" is output to status line 21 and status signal of "1, 1" is output to status line 31. Address decoder 15 recognizes from the state of these status signals that 1M byte option memory module 12M is inserted into first expanding memory slot 12 and second expanding memory slot 13 is vacant. When an address on address bus 10 designates an area of 1M byte option memory module 12M, address decoder 15 outputs gate enable signal of "1" to signal line 52. AND gate circuit 17 is thus opened and memory control signal CONT1 is supplied to option memory module 12M, which allows read/write access of memory module 12M inserted into first expanding memory slot 12.

Assuming that a 256K byte option memory module shown in Fig. 3B is inserted into only second expanding memory slot 13, a status signal of "1, 1" is output to status line 21 and a status signal of "0, 1" is output to status line 31. Address decoder 15 recognizes from the state of these status signals that first expanding memory slot 12 is vacant and 256K byte option memory module 13M is inserted into second expanding memory slot 13. When an address on address line 10 designates an area of 256K byte option memory module 13M, address decoder 15 outputs a gate enable signal "1" to signal line 53. AND gate circuit 18 thus supplies memory control signal CONT2 to option memory module 13M, which allows read/write access of memory module 13M inserted into second expanding memory slot 13.

Assume that 256k byte option memory module 12M shown in Fig. 3B is inserted into first expanding memory slot 12 and 1M byte option memory module 13M shown in Fig. 3A is inserted into second expanding memory slot 13. A status signal of "0, 1" is output to status line 21 and a status signal "1, 0" is output to status line 31. Address decoder 15 recognizes from the state of these status signals that 256K byte option memory module 12M is inserted into first expanding memory slot 21 and 1M byte option memory module 13M is inserted into second expanding memory slot 13. When an address on address line 10 designates an area of option memory module 12M, address decoder 15 outputs a gate enable signal of "1" to signal line 52. AND gate circuit 17 thus supplies memory control signal CONT1 to option memory module 12M, which allows read/write access of 256K byte option memory module 12M inserted into first expanding memory slot 12. When an address on address bus 10 designates an area of option memory module 13M, address decoder 15 outputs gate enable signal of "1" to signal line 53. AND gate circuit 18 thus supplies inherent memory control signal CONT2 to option memory module 13M, which allows read/write access of 1M byte option memory module 13M inserted into second expanding memory slot 13.

The entire operation of the computer shown in Fig. 2 will be specifically described.

Assume that the capacity of standard memory 11 is 1M byte, that no memory module is inserted in first memory expanding memory slot 12, and that a 1M byte memory module is inserted into second memory expanding memory slot 13. Assume that 1 byte corresponds to 1 address.

Status signals STS1-A, STS1-B, STS2-A, and STS2-B thus become "1", "1", "1" and "0" levels, respectively. Address decoder 15 detects from these signals that memory slot 12 is vacant and the address range of the memory module inserted into memory slot 13 is between 1M ($10^6$) and 2M-1 ($2 \times 10^{6-1}$).

Assuming that CPU 23 outputs a memory read signal and address Ao ($0 \leq Ao \leq 1M-1$), address decoder 15 determines that address Ao designates a storage area of standard memory 11 and then outputs a signal of "1" level onto signal line 51. Memory control signal generating circuit 14 generates and outputs RAS, CAS and WR signals in response to a control signal from CPU 23. AND gate circuit 16 outputs the RAS, CAS and WR signals as memory control signal CONT0.

1 byte data stored in a location of address Ao of standard memory 11 is output onto data bus 19 in response to memory control signal CONT0 and address Ao. CPU 23 reads the 1 byte data through system bus 22.

Assuming that CPU 23 outputs a memory write signal, address $A_1$ ($1M \leq A_1 \leq 2M-1$), and data $D_1$ onto system bus 22, address decoder 15 determines that address $A_1$ designates memory module 13M inserted into memory slot 13 and then outputs a signal of "1" level onto signal line 53. Memory control signal generating circuit 14 generates and outputs RAS, CAS and WR signals in response to a control signal from CPU 23. AND gate circuit 18 outputs the RAS, CAS and WR signals as memory control signal CONT2.

Data $D_1$ is written in a location of address $A_1$ of memory module 13M inserted into memory slot 13 through data bus 19 in response to memory control signal CONT2 and address $A_1$.

In the embodiment mentioned above, the number of memory expanding slots is two, and the number of memory modules is two and their memory capacities are 256K byte and 1M byte. The present invention is not limited to that number of slots or that number of memory modules. For example, the number of slots can be one and the number of memory modules can be three or more. Similarly, the number of slots can be three or more and the number of memory modules can be one and, in this case, the status signal need not include information indicating the memory capacity of the option memory module. The option memory modules may have the other memory capacities such as 512K bytes, 2M bytes, 4M bytes, 8M bytes, 16M bytes and 32M bytes. If the option memory modules have three different memory capacities, "STS-A, STS-B = (0, 0)" is assigned to the third memory module. If the memory modules have four different memory capacities, the number of status lines for each slot may be increased to three. If a terminal for expanding a memory is provided, the slots are not necessarily required.

The memory module is not limited to a D-RAM. For example, an S-RAM can be used in place of the D-RAM. If the S-RAM is used as a memory module, memory control signal generating circuit 14 outputs read/write signal R/W, output enable signal OE and the like.

Neither the memory module nor the address decoder is not limited to those shown in Figs. 3A, 3B and 4. They can have other configurations.

As has been described in detail, according to the above embodiment of the present invention, the computer system having a plurality of slots into which expanding memory modules are arbitrarily inserted, includes a plurality of pairs of status lines for outputting information representing the insertion state of each of the slots (representing whether the memory module is inserted or not, or representing the capacity of the memory module inserted into the slot). Furthermore, a circuit receive information of each of the status lines and a memory access address in order to determine into which slot a memory module to be accessed is inserted, and a control circuit controls access of the memory module inserted into the slot determined by the above circuit. Consequently, in the computer system according to the embodiment, a memory module having an arbitrary capacity can be inserted into an arbitrary slot and a desired memory capacity can be obtained through a simple operation without specifying the capacity of an expanding memory module or taking into consideration the order of insertion of the memory modules.

## Claims

1. A computer system capable of expanding a memory capacity, comprising:
standard memory means (11) for storing data;
a plurality of slot means (12, 13) into which a respective plurality of memory modules means (12M, 13M) for storing data may be inserted to expand said memory capacity;
status line means (21, 31) connected to each of said plurality of slot means, for outputting a status signal including information which represents whether each respective memory module means is inserted into the slot means and which represents a memory capacity of the inserted memory module means when at least one of said plurality of memory module means is inserted into said plurality of slot means;
designating means (15, 31, 32) connected to said status line means (21, 31), for outputting a signal which designates, in response to said status signals, an address range of said at least one memory module means inserted into said plurality of slot means;
determining means (15, 34) responsive to the signal designating the address range from said designating means and an address signal for memory access for determining whether said standard memory means or one of said plurality of memory module means inserted into the slot means is to be accessed; and
execution means (14, 16 to 18) for accessing either one of said standard memory means or said one of said plurality of memory module means in accordance with a result of the determination of said determining means.

2. The computer system according to claim 1, characterized in that each of said plurality of memory module means comprises status means (TA, TB) which is connected to said status line means (21, 31) when the memory module means is inserted into respective one of said plurality of slot means and wherein said status means supplies to said status line means (21, 31) a signal indicating that the memory module means is inserted into the respective slot means and indicating that a memory capacity of the memory module means.

3. The computer system according to claim 2, characterized in that said status means comprises a plurality of terminals connected to said status line means when the memory module means is inserted into

EP 0 394 935 A2

the respective slot means, said plurality of terminals being preset to voltage values in accordance with the memory capacity of said memory module means.

4. The computer system according to claim 1, characterized in that said status line means comprises a plurality of signal lines arranged for each of said plurality of slot means.

5. The computer system according to claim 1, characterized in that said designating means includes a decoder (31) for decoding the status signal and an encoder (32) for outputting a signal designating a predetermined address range in response to a signal output from said decoder.

6. The computer system according to claim 1, characterized in that said determining means includes a comparator (34) for comparing the address range designated by the signal output from said encoder (32) with an address value designated by the address signal to determine one of the standard memory means (11) and the memory module means (12M, 13M) to be accessed and output a signal indicating a result of the determination.

7. The computer system according to claim 1, characterized in that said execution means comprises generation means for generating a memory control signal for controlling the memory access; means connected to said determining means and said generation means, for supplying the memory control signal to the memory to be accessed in accordance with the determination result of said determining means; and data transmission means for transmitting data read out from and data to be written in one of said standard memory means and said plurality of memory module means.

8. A memory control system characterized by comprising:

a plurality of connecting means (12, 13) which may each be connected to respective plurality of memory means (12M, 13M) connected;

first detecting means (15, 21, 31) for detecting whether said plurality of memory means is connected to a respective one of said plurality of connecting means; and

setting means (14 to 18) connected to said first detecting means to receive address data, for setting a one of said memory means in an accessible state in response to a result of the detection of said first detection means and said address data.

9. The memory control system according to claim 8, characterized in that said system further comprises second detecting means (15, 21, 31) for detecting a capacity of the any of said plurality of memory means connected to said connecting means, and said setting means (14 to 18) sets said one of said memory means in an accessible state in response to a result of the detection of said first and second detecting means and the address data.

10. The memory control system according to claim 9, characterized in that said setting means comprises designating means (31, 32) for outputting a signal which designates an address range of each of said plurality of memory means connected to said plurality of connecting means in response to a result of the detection of said first and second detection means; determining means (34) for determining which one of said plurality of memory means is designated by an address designated by the address data upon receiving the signal from said designating means (31, 32) and the address data; and setting means (14 to 18) for setting said one of said plurality of memory means in an accessible state in response to a result of the determination of said determining means.

11. A data processing system having a function of expanding a memory capacity, characterized by comprising:

data processing means (22, 23) for instructing memory access for data processing;

standard memory means (11) connected to said data processing means, for storing data;

a plurality of holding means (12, 13) each of which is detachably connected to a respective plurality of additional memory means, said additional memory means being added to said standard memory means and storing data to expand the memory capacity which is usable for said data processing means;

detecting means (21, 31, 15) for detecting whether each of said holding means is connected to each of said plurality additional memory means and for, when at least one of said plurality of holding means is connected to at least one of said plurality of additional memory means, detecting a capacity of said at least one additional memory means;

determining means (14 to 18) for determining whether said standard memory means or one of said plurality of additional memory means is to be accessed, in response to a detection result of said detection means and the address data; and

access means (10, 19, 23) connected to said data processing means, said standard memory means, and said plurality of additional memory means, for accessing either one of said standard memory means or at least one of said additional memory means memory means determined by said determining means in accordance with an instruction of said data processing means.

9

12. The data processing system according to claim 11, characterized in that said detection means is connected to said holding means and comprises status line means (21, 31) for transmitting a status signal including information which represents whether any of plurality of said additional memory means is connected to each of said holding means and which represents a capacity of any said connected additional memory means connected to one of said holding means; and said determining means comprises designating means (31, 32) for designating an address range of said plurality of additional memory means connected to said holding means in accordance with a result of said detection means, specifying means (34) for comparing the address data and the address range designated by said designating means to specify either one of said standard memory means or at least one of said additional memory means to be accessed, and access means (14, 16 to 18) for allowing said specified memory means specified by said specifying means to be accessed.

13. The data processing system according to claim 11, characterized in that said additional memory means comprises status means (TA, TB) connected to said status line means, for supplying the status signal to said status line means.

14. The data processing system according to claim 11, characterized in that said designating means includes a decoder (31) for decoding the status signal and an encoder (32) for outputting a signal designating a predetermined address range in response to a signal output from said decoder.

15. A memory control system characterized by comprising:

a connecting means (12, 13) to which a memory means (12M, 13M), having a variable memory capacity, for storing data may be detachably connected;

first detecting means (15, 21, 31) for detecting whether the memory means is connected to the connecting means;

second detecting means for detecting a memory capacity of the memory means when the memory means is connected to the connecting means; and

setting means (14 to 18) connected to the first and second detecting means and receiving address data, for setting the memory means in an accessible state in response to a result of the detection of the first and second detection means and the address data.

F I G. 1

MEMORY READ

MEMORY WRITE

REFRESH

MEMORY CONTROL SIGNAL GENERATOR 4

ADDRESS DECODER 5

ADDRESS

AND 6 — CONT 0

AND 7 — CONT 1

AND 8 — CONT n

STANDARD MEMORY 1

OPTIONAL MEMORY MODULE -1 2

OPTIONAL MEMORY MODULE -n 3

DATA

EP 0 394 935 A2

F I G. 2

F I G. 3A          F I G. 3B

F I G. 4

EP 0 394 935 A2